# EUROPÄISCHE PATENTSCHRIFT

(11) **EP 1 660 540 B1**
(45) Veröffentlichungstag und Bekanntmachung des Hinweises auf die Patenterteilung: **30.09.2009**
(21) Anmeldenummer: 04741042.8
(22) Anmeldetag: 15.07.2004
(51) Int. Cl.: C08F 2/10, C08F 20/06

(54) **SPRÜPOLYMERISATIONSVERFAHREN**
SPRAY POLYMERISATION METHOD
PROCEDE DE POLYMERISATION PAR PULVERISATION

(30) Priorität: 29.08.2003 DE 10340253
(43) Veröffentlichungstag der Anmeldung: 31.05.2006
(73) Patentinhaber: BASF SE, 67056 Ludwigshafen (DE)
(72) Erfinder: SCHMID, Markus, 67146 Deidesheim (DE); SEIDL, Volker, 68163 Mannheim (DE); DISTLER, Dieter, 74321 Bietigheim-Bissingen (DE); HÄHNLE, Hans-Joachim, 67435 Neustadt (DE); LÖSCH, Dennis, 67122 Altrip (DE); MORITZ, Hans-Ulrich, 21227 Bendesdorf (DE); KRÜGER, Marco, 68161 Mannheim (DE)
(86) Internationale Anmeldenummer: PCT/EP2004/007860
(87) Internationale Veröffentlichungsnummer: WO 2005/030810

(56) Entgegenhaltungen:
- EP-A- 0 348 180
- WO-A-96/40427

## Beschreibung

Die vorliegende Erfindung betrifft ein verbessertes Verfahren zur Sprühpolymerisation radikalisch polymerisierbarer Monomere.

Vernetzte, wasserquellbare Polymere, die auch als Hydrogele oder als Superabsorber bezeichnet werden, können ein Vielfaches ihres Eigengewichts an wässrigen Flüssigkeiten absorbieren. Sie werden in großem Umfang in Hygieneartikeln, wie Windeln, Damenbinden und dergleichen eingesetzt. Sie enthalten einpolymerisierte Einheiten wasserlöslicher ethylenisch ungesättigter Monomere, wie Carbonsäuren, Amide und dergleichen. Durch Einbau von Vernetzungsstellen im Polymer werden wasserunlösliche Polymere erhalten. Der Vernetzungsgrad bestimmt nicht nur die Wasserlöslichkeit der Polymere, sondern auch deren Absorptionskapazität.

Ein weiteres Kriterium wasserquellbarer Polymere ist ihr extrahierbarer Anteil. Beim Kontakt der wasserquellbaren Polymerisate mit Körperflüssigkeiten werden die extrahierbaren Anteile ausgewaschen, was die Absorptionskapazität verschlechtert.

In der Patentanmeldung EP-A-0 348180 wird ein Verfahren zur Sprühpolymerisation von wasserabsorbierenden Harzen beschrieben. Dazu wird eine wässrige Lösung aus teilneutralisierter Acrylsäure, Vernetzer und Initiator in einen Gasstrom verdüst und polymerisiert. Die Anmeldung lehrt, dass die relative Feuchte in dem Gasstrom mindestens 30% betragen muss. Bei niedrigeren relativen Feuchten verdampft das in den Tropfen enthaltende Wasser zu schnell und in den Tropfen scheidet sich Monomer ab, das nicht mehr polymerisieren kann, der Monomerumsatz bleibt unvollständig. Nachteilig bei diesem Verfahren ist die Notwendigkeit der Produktabtrennung in einem gut isolierten oder begleitbeheizten Behälter (ansonsten kondensiert Wasserdampf auf dem Produkt).

US 5,269,980 beschreibt ein Verfahren zur Herstellung von Polymerpartikeln. Dabei werden Aerosole aus Polymerlösungen, Lösungen vorpolymerisierter Monomere oder Monomerlösungen erzeugt und diese Aerosolteilchen bei Temperaturen oberhalb 150°C getrocknet bzw. polymerisiert. Polymerisierte Aerosolteilchen sind für eine Anwendung als wasserabsorbierendes Harz zu klein.

Gemäß der Patentanmeldung WO 96/40427 wird die Sprühpolymerisation in der Weise durchgeführt, dass Monomerlösungen in eine geheizte, im wesentlichen statische Atmosphäre verdüst werden. Bei reduziertem Druck ist der Wassergehalt in den hergestellten Polymerkugeln deutlich verringert, die Polymerteilchen weisen aber eine rauhe Oberfläche auf. Bei erhöhtem Druck werden glatte Polymerkugeln erhalten.

Der gewünschte niedrige Restwassergehalt sollte ohne weitere Arbeitsschritte, beispielsweise Trocknung, erreicht werden. Daher wurde mit unter 30 Gew.-% ein niedriger Wassergehalt der Monomerlösungen gewählt.

Die Patenanmeldung EP-A-0 816 383 lehrt die Herstellung von hydrophilen, hochquellfähigen Hydrogelen in einem Wirbelbettapparat. Die nach dem in der Anmeldung beschriebenen Verfahren erzeugten Polymerpartikel haben einen Durchmesser von 0,1 bis 2 mm und haben eine Zwiebelschalenstruktur, d.h., auf ein vorhandenes Polymerkorn wird weitere Monomerlösung aufgesprüht, die dann polymerisiert. Dadurch werden auch größerer Polymerteilchen erhalten als nach den vorgenannten Verfahren.

Der vorliegenden Erfindung lag die Aufgabe zugrunde ein verbessertes Sprühpolymerisationsverfahren zur Herstellung vernetzter, wasserquellbarer Polymere zu finden.

Es wurde nun gefunden, dass durch Sprühpolymerisation einer Monomerlösung mit einem Wassergehalt von mindestens 55 Gew.-% in einer inerten Atmosphäre vernetzte, wasserquellbare Polymere erhalten werden, die hinsichtlich Absorptionsvermögen und extrahierbaren Anteilen verbesserte Eigenschaften haben.

Bevorzugt liegt der Wassergehalt bei 60 bis 95 Gew.-%, besonders bevorzugt bei 65 bis 90 Gew.-%, insbesondere bei 70 bis 85 Gew.-%.

Die in dem erfindungsgemäßen Verfahren einsetzbaren Monomerlösungen enthalten beispielsweise mindestens a) ein radikalisch polymerisierbares Monomer, b) einen Vernetzer, c) einen Polymerisationsinitiator und d) Wasser.

Radikalisch polymerisierbare Monomere a) sind beispielsweise ethylenisch ungesättigte C₃-C₆-Carbonsäuren, deren Amide und Ester mit Aminoalkoholen der Formel I 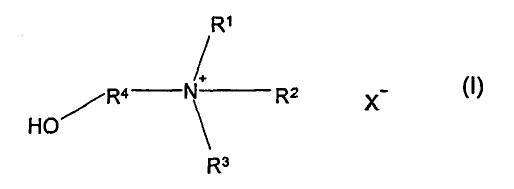 in der R⁴ C₂- bis C₅-Alkylen und R¹, R², R³ unabhängig voneinander Wasserstoff, Methyl, Ethyl, oder Propyl bedeuten. Bei diesen Verbindungen handelt es sich beispielsweise um Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure sowie die Alkali- oder Ammoniumsalze dieser Säuren, Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion X⁻für die Verbindungen der Formel (I) ist der Säurerest der Mineralsäuren bzw. der Carbonsäuren oder Methosulfat, Ethosulfat oder Halogenid aus einem Quaternisierungsmittel.

Weitere radikalisch polymerisierbare Monomere a) sind N-Vinylpyrrolidon, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als radikalisch polymerisierbare Monomere eignen sich auch N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Weiterhin kommen weitere monoethylenisch ungesättigte Sulfon- oder Phosphonsäuren in Betracht, beispielsweise Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Allylphosphonsäure, Styrolsulfonsäure und 2-Acrylamido-2-methylpropansulfonsäure. Die Monomeren a) können allein oder in Mischung untereinander eingesetzt werden.

Bevorzugte Monomere a) sind Acrylsäure, Methacrylsäure sowie die Alkali- oder Ammoniumsalze dieser Säuren, Acrylamid und/oder Methacrylamid, des Weiteren Vinylsulfonsäure, Acrylamidopropansulfonsäure oder Mischungen dieser Säuren, beispielsweise Mischungen aus Acrylsäure und Methacrylsäure, Mischungen aus Acrylsäure und Acrylamidopropansulfonsäure oder Mischungen aus Acrylsäure und Vinylsulfonsäure. Diese Monomere können in jedem beliebigen Verhältnis miteinander copolymerisiert werden.

Bevorzugte Monomere a) sind auch Mischungen der obengenannten Säuren mit deren Alkali- oder Ammoniumsalzen. Beispielsweise können Mischungen aus Acrylsäure und deren Alkalisalzen durch Neutralisation von Acrylsäure mit Alkalihydroxiden und/oder Alkalicarbonaten erhalten werden. Der Neutralisatonsgrad beträgt vorzugsweise mindestens 40%, besonders bevorzugt 60 bis 90 %. Dabei bedeutet beispielsweise bei einer Mischung aus Acrylsäure und Natriumacrylat ein Neutralisationsgrad von 50%, dass Natriumacrylat und Acrylsäure im Molverhältnis 50:50 vorliegen, und ein Neutralisationsgrad von 75% bedeutet, dass Natriumacrylat und Acrylsäure im Molverhältnis 75:25 vorliegen.

Ganz besonders bevorzugte Monomere a) sind Acrylsäure, Methacrylsäure, die Kaliumsalze dieser Säuren sowie Mischungen davon, beispielsweise Mischungen aus Acrylsäure und Kaliumacrylat.

Die Polymerisation der Monomere a) erfolgt in Gegenwart eines Vernetzers b) oder einer Kombination verschiedener Vernetzer.

Geeignete Vernetzer b) sind beispielsweise (Meth)acrylsäureester mehrwertiger Alkohole, die mit bis zu 100, meist bis zu 50, Ethylenoxid- und/oder Propylenoxideinheiten alkoxyliert sein können. Geeignete mehrwertige Alkohole sind insbesondere C₂-C₁₀-Alkanpolyole mit 2 bis 6 Hydroxylgruppen, wie Ethylenglykol, Glycerin, Trimethylolpropan, Pentaerythrit oder Sorbitol. Bevorzugte Vernetzer sind Polyethylenglykoldiacrylat und Polyethylenglykoldimethacrylate, die sich jeweils von Polyethylenglykolen (die als ethoxyliertes Ethylenglykol aufgefasst werden können) eines Molekulargewichts von 200 bis 2000 ableiten. Weitere verwendbare Vernetzer b) sind Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat oder Diacrylate und Dimethacrylate von Blockcopolymerisaten aus Ethylenoxid und Propylenoxid.

Als weitere Vernetzer b) kommen Diallylcarbonat, Allylcarbonate oder Allylether mehrwertiger Alkohole, die mit bis zu 100, meist bis zu 50, Ethylenoxid- und/oder Propylenoxideinheiten alkoxyliert sein können, und Allylester mehrwertiger Carbonsäuren in Betracht.

Allylcarbonate mehrwertiger Alkohole entsprechen der allgemeinen Formel II 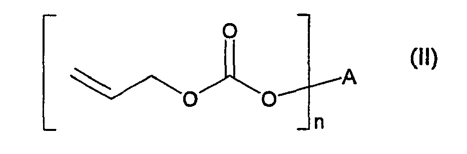 worin A für den Rest eines mehrwertigen Alkohols steht, der mit bis zu 100, meist bis zu 50, Ethylenoxid- und/oder Propylenoxideinheiten alkoxyliert sein kann; und n für die Wertigkeit des Alkohols, beispielsweise für eine ganze Zahl von 2 bis 10, vorzugsweise 2 bis 5, steht. Ein besonders bevorzugtes Beispiel einer derartigen Verbindung ist Ethylenglykoldi(allylcarbonat). Weiter eignen sich besonders Polyethylenglykoldi(allylcarbonate), die sich von Polyethylenglykolen eines Molekulargewichts von 200 bis 2000 ableiten.

Als bevorzugte Beispiele für Allylether lassen sich aufführen: Polyethylenglykoldiallylether, die sich von Polyethylenglykolen eines Molekulargewichts von 200 bis 2000 ableiten; Pentraerythrittriallylether oder Trimethylolpropandiallylether. Weiterhin geeignet sind Umsetzungsprodukte von Ethylenglykoldiglycidylether oder Polyethylenglykolglycidylether mit 2 Mol Allylalkohol und/oder Pentaerythritoltriallylether.

Ein geeigneter Allylester einer mehrwertigen Carbonsäure ist beispielsweise Diallylphthalat.

Die Monomeren werden im Allgemeinen in höchstens 45, vorzugsweise 5 bis 40, besonders bevorzugt 10 bis 35, insbesondere 15 bis 30 gew.-%iger wässriger Lösung in Gegenwart von Polymerisationsinitiatoren c) miteinander copolymerisiert.

Als Polymerisationsinitiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert-Butylhydroperoxid, Cumolhydroperoxid, tert-Amylperpivalat, tert-Butylperpivalat, tert-Butylperneohexanoat, tert-Butylperisobutyrat, tert-Butyl-per-2-ethylhexanoat, tert-Butylperisononanoat, tert-Butylpermaleat, tert-Butylperbenzoat, Di-(2-ethylhexyl)peroxydicarbonat, Dicyclohexylperoxydicarbonat, Di-(4-tert-butylcyclohexyl)peroxydicarbonat, Dimyristilperoxydicarbonat, Diacetylperoxydicarbonat, Allylperester, Cumylperoxyneodecanoat, tert-Butylper-3,5,5-trimethylhexanoat, Acetylcyclohexylsulfonylperoxid, Dilaurylperoxid, Dibenzoylperoxid und tert-Amylperneodekanoat. Weitere geeignete Polymerisationsinitiatoren c) sind wasserlösliche Azostarter, beispielsweise 2,2'-Azobis-(2-amidinopropan)dihydrochlorid, 2-(Carbamoylazo)isobutyronitril, 2,2'-Azobis[2-(2'-imidazolin-2-yl)propan]dihydrochlorid und 4,4'-Azobis-(4-cyanovaleriansäure). Die genannten Polymerisationsinitiatoren c) werden in üblichen Mengen eingesetzt, beispielsweise in Mengen von 0,01 bis 5, vorzugsweise 0,05 bis 2,0 Gew.-%, bezogen auf die zu polymerisierenden Monomere.

Als Initiatoren c) kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, - hyposulfit, -pyrosulfit oder -sulfid, Metallsalze, wie Eisen(II)-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x 10⁻⁵ bis 1 Mol-% der reduzierenden Komponente des Redoxkatalysators. Anstelle der oxidierenden Komponente des Redoxkatalysators kann man auch einen oder mehrere wasserlösliche Azostarter verwenden.

Bevorzugt wird im erfindungsgemäßen Verfahren ein Redoxsystem, bestehend aus Wasserstoffperoxid, Natriumperoxodisulfat und Ascorbinsäure eingesetzt. In einer üblichen Ausführungsform werden diese Komponenten in den Konzentrationen 1 x 10⁻² Mol-% Wasserstoffperoxid, 0,084 Mol-% Natriumperoxodisulfat und 2,5 x 10⁻³ Mol-% Ascorbinsäure bezogen auf die Monomere eingesetzt.

Die verwendeten Monomeren sind vorzugsweise mit einem handelsüblichen Polymerisationsinhibitor stabilisiert, besonders bevorzugt mit einem Polymeriationsinhibitor, der nur zusammen mit Sauerstoff wirkt, beispielsweise Hydrochinonmonomethylether.

Handelsübliche Polymerisationsinhibitoren sind Polymerisationsinhibitoren, die aus Gründen der Produktsicherheit als Lagerstabilisatoren in den jeweiligen Monomeren eingesetzt werden. Beispiele für solche Lagerstabilisatoren sind Hydrochinon, Hydrochinonmonomethylether, 2,5-Di-tert.-Butylhydrochinon und 2,6-Di-tert.-butyl-4-methylphenol.

Die Reaktion wird vorzugsweise in Apparaten durchgeführt, die auch für die Sprühtrocknung geeignet sind. Derartige Reaktoren werden beispielsweise in K. Masters, Spray Drying Handbook, 5th Edition, Longman, 1991, Seiten 23 bis 66, beschrieben.

Bevorzugt wird die Reaktion in Apparaten durchgeführt in denen die Monomerlösung in Form monodisperser Tropfen frei fallen kann. Geeignet dazu sind Apparaturen, wie beispielsweise in der Patentschrift US 5,269,980 beschrieben.

Der sich beim Versprühen einstellende Tröpfchendurchmesser ist erfindungsgemäß zweckmäßig von 50 bis 1000 µm, bevorzugt von 100 bis 600 µm.

Die Reaktion kann im Überdruck und im Unterdruck durchgeführt werden, bevorzugt ist der Reaktionsdruck der sich einstellt, wenn das Abgassystem gegenüber der Atmosphäre offen ist.

Der Reaktor wird von einem Inertgas, vorzugsweise Stickstoff, durchströmt. Bevorzugt ist die Gleichstromfahrweise, das heißt, das Inertgas durchströmt den Reaktor von oben nach unten. Der Wasserdampfgehalt des Inertgases beträgt im allgemeinen bis 1 Vol.-%, vorzugsweise bis 0,5 Vol.-%. Die Inertgasgeschwindigkeit wird vorzugsweise so eingestellt, dass die Strömung im Reaktor laminar ist und beträgt beispielsweise 0,02 bis 1,5 m/s, bevorzugt 0,05 bis 0,4 m/s.

Das Inertgas wird zweckmäßigerweise vor dem Reaktor auf die Reaktionstemperatur von 90 bis 300°C, vorzugsweise 150 bis 210°C, vorgewärmt.

Das Reaktionsabgas kann beispielsweise in einem Wärmeaustauscher abgekühlt werden. Dabei kondensieren Wasser und nicht umgesetzte Acrylsäure. Danach kann das Abgas zumindest teilweise wieder aufgewärmt und als Kreisgas in den Reaktor zurückgeführt werden. Vorzugsweise wird das Abgas so abgekühlt, dass das abgekühlte Abgas den für die Reaktion gewünschten Anteil an Wasserdampf hat. Ein Teil des Abgases kann ausgeschleust und durch frisches Inertgas ersetzt werden.

Besonders bevorzugt ist ein Wärmeverbund, dass heißt, ein Teil der Abwärme beim Abkühlen des Abgases wird zum Aufwärmen des Kreisgases verwendet.

Die Reaktoren werden bevorzugt begleitbeheizt. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden, vorzugsweise am Boden über eine Förderschnecke, und gegebenenfalls bis zur gewünschten Restfeuchte und zum gewünschten Restmonomerengehalt getrocknet werden.

Nach dem erfindungsgemäßen Verfahren werden wasserquellbare Polymere mit hohem Absorptionsvermögen und geringen extrahierbaren Anteilen erhalten.

### Beispiele:

Alle Mengenangaben sind, soweit nicht anders angegeben, Gewichtsteile. Das getrocknete Hydrogel wurde mit folgenden von der European Disposables and Nonwovens Association (Edana) standardisierten Testmethoden untersucht:
Zentrifugenretentionskapazität (CRC Centrifuge Retention Capacity):
   Edana recommended test methods no. 441.2-02
Extrahierbare Anteile (Extractables):
   Edana recommended test methods no. 470.2-02

### Beispiele 1 bis 8

Eine wässrige Monomerlösung, bestehend aus teilneutralisierter Acrylsäure und Methylenbisdiacrylamid (Vernetzer) wurde unmittelbar vor dem Reaktor mit einer 1,0 gew.-%igen wässrigen Lösung von 2,2'-Azobis-2-amidinopropandihydrochlorid (Initiator) vermischt.

Die Vernetzermenge betrug 0,3 Gew.-%, bezogen auf das eingesetzte Monomer. Die Initiatormenge betrug 0,11 Gew.%, bezogen auf die eingesetzte Monomerlösung. Der Neutralisationsgrad der eingesetzten Acrylsäure betrug 75 Mol-%.

Als Reaktor wurde ein senkrecht aufgehängtes Edelstahlrohr mit einer Länge von 2.600 mm und einem Durchmesser von 164 mm eingesetzt. Die Temperatur konnte über drei unabhängige Heizkreise eingestellt werden. In das Edelstahlrohr war von oben ein Glasrohr mit einem Durchmesser von 102 mm eingesteckt. Auf das Glasrohr war ein modifizierter Schwingblenden-Aerosolgenerator SBG-2000 der Fa. Palas GmbH aus Karlsruhe aufgesetzt. Die Schwingblendenöffnung hatte einen Durchmesser von 75 µm. Über den Schwingblenden-Aerosolgenerator wurden 0,4 l/min Stickstoff und 1,0 ml/min Monomerlösung in den Reaktor dosiert. Zusätzlich wurden 10 l/min auf Reaktionstemperatur vorgewärmter Stickstoff in den Zwischenraum zwischen Edelstahlrohr und Glasrohr dosiert. Der Zwischenraum war mit Raschigringen gefüllt und für den Stickstoff nach unten offen. Die Raschigringe dienten als Strömungsbegradiger.

Das Produkt wurde unten am Reaktor aufgefangen, getrocknet (1 h bei 125°C) und analysiert. Angebeben sind die relativen Werte bezogen auf das Vergleichsbeispiel.

**Tab. 1: Sprühpolymerisation von Natrium/Kalium-acrylat**

| Bsp. | Wassergehalt der Monomerlösung | Na-/K-acrylat | Temp. | rel. CRC | rel. Extrahierbare Anteile |
|---|---|---|---|---|---|
| | [Gew.-%] | | [°C] | | |
| 1* | 50,0 | K-acrylat | 154 | 1,00 | 1,00 |
| 2 | 60,0 | K-acrylat | 154 | 1,13 | 0,78 |
| 3 | 70,0 | K-acrylat | 157 | 1,65 | 0,32 |
| 4 | 58,9 | Na-acrylat | 153 | 1,03 | 1,11 |
| 5 | 65,0 | Na-acrylat | 159 | 1,15 | 0,95 |
| 6 | 70,0 | Na-acrylat | 155 | 1,46 | 0,79 |

| | | | | | |
|---|---|---|---|---|---|
| * Vergleichsbeispiel | | | | | |

## Patentansprüche

1. Verfahren zur Sprühpolymerisation einer Monomerlösung, enthaltend radikalisch polymerisierbare Monomere, in einer inerten Atmosphäre, **dadurch gekennzeichnet, dass** der Wassergehalt der Monomerlösung 60 bis 95 Gew.-% und die Reaktionstemperatur 90 bis 300°C beträgt.

2. Verfahren nach Anspruch 1, **dadurch gekennzeichnet, dass** der Wassergehalt der Monomerlösung mindestens 65 Gew.-% beträgt.

3. Verfahren nach Anspruch 1, **dadurch gekennzeichnet, dass** der Wassergehalt der Monomerlösung mindestens 70 Gew.-% beträgt.

4. Verfahren nach einem der vorgenannten Ansprüche, **dadurch gekennzeichnet, dass** die Reaktionstemperatur 150 bis 210°C beträgt.

5. Verfahren nach einem der vorgenannten Ansprüche, **dadurch gekennzeichnet, dass** das radikalisch polymerisierbare Monomer Acrylsäure und/oder Methacrylsäure ist.

6. Verfahren nach Anspruch 5, **dadurch gekennzeichnet, dass** die Acrylsäure und/oder Methacrylsäure zu mindestens 40% neutralisiert ist.

7. Verfahren nach einem der Ansprüche 1 bis 4, **dadurch gekennzeichnet, dass** das radikalisch polymerisierbare Monomer eine Mischung aus Acrylsäure und Kaliumacrylat ist.

8. Wasserquellbare Polymere erhältlich nach einem Verfahren gemäß den Ansprüchen 1 bis 7.

## Claims

1. The process for spray polymerization in an inert atmosphere of a monomer solution comprising free-radically polymerizable monomers when the water content of the monomer solution is from 60 to 95% by weight and the reaction temperature is in the range from 90 to 300°C.

2. The process according to claim 1 when the water content of the monomer solution is at least 65% by weight.

3. The process according to claim 1 when the water content of the monomer solution is at least 70% by weight.

4. The process according to any of the aforementioned claims when the reaction temperature is in the range from 150 to 210°C.

5. The process according to any of the aforementioned claims when the free-radically polymerizable monomer is acrylic acid and/or methacrylic acid.

6. The process according to claim 5 when the acrylic acid and/or methacrylic acid is at least 40% neutralized.

7. The process according to any of claims 1 to 4 when the free-radically polymerizable monomer is a mixture of acrylic acid and potassium acrylate.

8. Water-swellable polymers obtainable by following a process according to claims 1 to 7.

## Revendications

1. Procédé pour la polymérisation par pulvérisation d'une solution de monomères contenant des monomères polymérisables par voie radicalaire, dans une atmosphère inerte, **caractérisé en ce que** la teneur en eau de la solution de monomères va de 60 à 95 % en poids et la température de la réaction est dans la plage de 90 à 300 °C.

2. Procédé selon la revendication 1, **caractérisé en ce que** la teneur en eau de la solution de monomères est d'au moins 65 % en poids.

3. Procédé selon la revendication 1, **caractérisé en ce que** la teneur en eau de la solution de monomères est d'au moins 70 % en poids.

4. Procédé selon l'une quelconque des revendications précédentes, **caractérisé en ce que** la température de la réaction est dans la plage de 150 à 210 °C.

5. Procédé selon l'une quelconque des revendications précédentes, **caractérisé en ce que** le monomère polymérisable par voie radicalaire est l'acide acrylique et/ou l'acide méthacrylique.

6. Procédé selon la revendication 5, **caractérisé en ce que** l'acide acrylique et/ou l'acide méthacrylique est/sont neutralisé(s) à raison d'au moins 40 %.

7. Procédé selon l'une quelconque des revendications 1 à 4, **caractérisé en ce que** le monomère polymérisable par voie radicalaire est un mélange d'acide acrylique et d'acrylate de potassium.

8. Polymères aptes à gonfler dans l'eau, pouvant être obtenus conformément à un procédé selon les revendications 1 à 7.
